# EUROPEAN PATENT SPECIFICATION

(11) **EP 3 007 559 B1**
(45) Date of publication and mention of the grant of the patent: **26.04.2017**
(21) Application number: 14730815.9
(22) Date of filing: 05.06.2014
(51) Int. Cl.: G01K 11/00, A21B 1/42

(54) **TEMPERATURE DETECTION DEVICE AND HEAT TREATMENT DEVICE**
TEMPERATURERFASSUNGSVORRICHTUNG UND WÄRMEBEHANDLUNGSVORRICHTUNG
DISPOSITIF DE DÉTECTION DE TEMPÉRATURE ET DISPOSITIF DE TRAITEMENT THERMIQUE

(30) Priority: 14.06.2013 EP 13172019
(43) Date of publication of application: 20.04.2016
(73) Proprietor: GEA Food Solutions Bakel B.V., 5761 EN Bakel (NL)
(72) Inventor: VAN RENS, Joseph Johan Maria, NL-6003 BK Weert (NL); STROLENBERG, Alex, NL-5768 RS Meijel (NL); VAN LEUKEN, Bart, NL-5711 BK Someren (NL)
(74) Representative: Kutzenberger Wolff & Partner
(86) International application number: PCT/EP2014/061733
(87) International publication number: WO 2014/198637

(56) References cited:
- EP-A1- 2 546 624
- WO-A1-01/29527
- WO-A2-2007/054685
- US-A- 3 438 035
- US-A1- 2012 261 406

## Description

The present invention relates to a temperature detection device for measuring the core temperature of a food product, as well as to a heat treatment device for a food product with a heating means for applying heat to the food product and a temperature detection device.

Such heat treatment devices are well known from the state of the art. In food production, such heat treatment devices are used to prepare food in a continuous manner, e.g. with a belt system running through an oven on which the food products are placed. One such heat treatment device is known from US 2012/0261406 A1.

Health regulations require those food products to be heated above a predetermined temperature in order to kill pathogenic microorganisms being potentially contained within the food product. Therefore, it is necessary to ensure that the entire product is heated above the predetermined temperature and not only parts or regions of the food product, such as for example the surface. In case e.g. the food product comprises bones, a homogeneous heat distribution cannot be guaranteed. Furthermore, the heat treatment device may by design comprise a non-uniform temperature distribution. At the same time, an overheating or overcooking of the food product is undesirable, as it negatively impacts the look and/or the taste of the food product.

It is therefore desirable to measure the temperature of the food product as exactly as possible. It is known from the state of the art to employ heat-sensitive cameras. These cameras have a high lateral resolution, e.g. in the x- and y-direction, but can only measure a surface temperature, which is not a reliable parameter as e.g. an oil film on the food product may have a much higher temperature compared to the temperature at the center of the food product, i.e. the core temperature. For measuring the core temperature, it is known from the state of the art to employ probes, which puncture the food product. Such a puncturing is undesirable as it negatively impacts the structural integrity and/or the look and/or the taste of the food product. Additionally, such a probe can only measure the temperature locally and it may be hindered by harder elements, such as bones and the like.

It was therefore the objective of the present invention to provide a temperature detection device, which precisely measures the core temperature of a food product non-invasively, as well as a heat treatment device comprising such a temperature detection device.

The objective is solved with a temperature detection device for measuring the core temperature of a food product, wherein the device comprises a phased array antenna.

Such array antennas are known from mobile telecommunications networks or radars and allow for a precise control of the directivity of the antenna by controlling the phase differences of the array-constituting antennas. Phased array antennas have not been employed for measuring temperatures, in particular of food products.

The temperature detection device according to the present invention advantageously provides for a non-contact and non-invasive measurement of the core temperature of a food product. Furthermore, it is herewith advantageously possible to allow for a high vertical resolution, e.g. in the z-direction, in particular while maintaining a high lateral resolution, thereby allowing for the precise measurement of the core temperature of food products.

It is herewith advantageously possible to provide an antenna whose directivity can be controlled precisely, while being preferably shielded from the environment, having a high antenna efficiency and a high sensitivity. Furthermore, such a temperature detection device is hygienic, temperature stable, exhibits only low noise and can be focused on a small area. In addition, it is herewith advantageously possible to measure the core temperature of a food product at different locations of the product with one antenna and/or to measure the core temperature in a highly focused area.

Preferably, the food product is a protein containing substance, in particular meat and/or fish and/or the like. More preferably, the food product is a dairy product and/or a vegetable and/or a fruit and/or the like. The food product may comprise bones or fish-bones. Even more preferably, the food product is processed, such as for example minced, marinated, spiced and/or coated, preferably battered.

Preferably, the food products to be measured comprise substantially the same shape and/or size. More preferably, the shapes and/or sizes of the food products vary.

Preferably, the array antenna is configured such that it is operated as a Dicke radiometer. It is herewith advantageously possible to measure even weak signals, in particular signals that are weaker than noise signals. The person skilled in the art understands that a Dicke radiometer is based on a rapid switching between the antenna signal and a reference noise source.

Therefore, the electronics of the array antenna circuit preferably comprise a reference noise source and a switch for rapidly switching between the reference noise source and the antenna signal.

In the context of this application, electronics may refer to electronics for operating the temperature detection device, in particular the array antenna, and/or to analyzing electronics which convert the signal of the array antenna into a temperature.

Preferably, the array antenna comprises an open waveguide, in particular a leaky wave type open waveguide. Alternatively or additionally, the temperature detection device comprises an open waveguide antenna, in particular a leaky wave antenna. More preferably, the temperature detection device comprises a reflector plate, wherein the food product, whose core temperature is to be measured, is located between the antenna and the reflector plate. The person skilled in the art understands that the embodiments described hereafter referring to a array antenna may as well be applied to an open waveguide antenna.

A leaky wave antenna is a traveling wave type antenna in which an electromagnetic wave is guided in a waveguide. If an open waveguide is employed, the electromagnetic wave leaks, i.e. radiates, from the opening, in particular in form of evanescent waves, which decay exponentially with the distance from the opening.

Preferably, the measurement time of the array antenna is adjustable between 0.5 s and 10 s or between substantially 0 s and 10s. The person skilled in the art acknowledges that if the food products are preferably continuously moved, the measurement time has to be shorter with increasing velocity of the food products, or transportation means transporting the food products, to maintain a predetermined measurement accuracy and/or precision. The measurement time may correspond to the time needed for a core temperature measurement at a certain position, or it may correspond to the time needed for a measurement along at least parts of the width, preferably the entire width, of a transportation means, e.g. a belt, at least at several discrete locations or positions. The person skilled in the art further acknowledges that the measurement time should ideally be infinitely small, but that due to physical and technical restraints, there is always a minimal measurement time. Alternatively, the measurement time of the array antenna is a fixed value, preferably in the range between 0.5 s and 10 s. For example, the measurement time may be 0.5 s, 1 s, 2.5 s, 5 s and/or 10 s.

Preferably, the array antenna comprises a passive radiator and/or the array antenna is a passive antenna. Alternatively, the array antenna is an active antenna. The person skilled in the art acknowledges that an active antenna actively sends a signal and receives a feedback signal being related to the sent signal, whereas a passive antenna is not configured for emitting radiation, i.e. a signal, but only receives radiation. A passive radiator preferably does not comprise an active driver unit.

The antenna is preferably coupled to the electronics via a coaxial cable and/or any other type of wave guide or data transfer solution

Preferably, the array antenna is most sensitive between 1.5 and 4 GHz, preferably between 2.8 and 3.6 GHz, in particular around 3.2 GHz and/or preferably between 1.2 and 2.0 GHz, in particular around 1.575 GHz. More preferably, the center frequency, corresponding to a center wavelength, of the antenna is tunable in a predetermined frequency range. In the context of the present application, center frequency is to be understood as the frequency for which the array antenna is most sensitive. The person skilled in the art acknowledges that this will usually correspond to a peak in the sensitivity. Ideally, this center frequency may correspond to the frequency of microwaves being emitted from the center or core, preferably in the z-direction, of a food product whose core temperature is to be measured.

The person skilled in the art understands that different frequencies in the microwave regime correspond to different penetration depths in the food product, such that a food product at a given temperature will emit electromagnetic radiation, in particular microwave radiation, having a certain frequency distribution

Penetration depth is to be understood as a certain length from the surface of an object into its inner volume, preferably with a direction perpendicular to its surface. In particular, penetration depth means the distance from the surface of a point from which radiation is emitted. The penetration depth depends e.g. on the temperature of an object, on its material and on the wavelength. For example, low frequencies, in particular in the microwave regime, may correspond to temperatures in the middle of the food product, i.e. core temperatures, whereas high frequencies, in particular in the microwave regime, may correspond to temperatures on the surface of the food product.

Therefore, for measuring the core temperature of a food product, preferably the center frequency of the temperature detection device is tuned such that the penetration depth at this frequency corresponds at least approximately to the center, in particular in the vertical direction, of the food product. Given that the center frequency usually comprises an uncertainty, i.e. a certain bandwidth, the measured core temperature preferably corresponds to an average of the temperature over the vertical extension of the food product, i.e. to an average core temperature and/or a different thickness. Alternatively, the core temperature may be determined by integrating over a specific thickness.

Preferably, the frequencies for which the array antenna is most sensitive are altered during a measurement. More preferably, the frequencies for which the array antenna is most sensitive are altered continuously.

Preferably, the measuring bandwidth of the array antenna comprises approximately 500 MHz, or about 250 MHz, or about 100 MHz, in particular 80 MHz. More preferably, the bandwidth is tunable, in particular by adjusting antenna and/or temperature detection device parameters. Even more preferably, the bandwidth of the array antenna is adjustable between 60 MHz and 100 MHz or between 40 and 120 MHz or between 10 and 200 MHz.

Preferably, a first detection area of the array antenna at a predetermined distance from a receiving aperture of the array antenna is smaller than 10 mm², preferably smaller than 1 mm², in particular around 0.1 mm². A person skilled in the art acknowledges that there are several ways to adjust the first detection area.

The microwave radiation being indicative of the temperature of the food product is radiated in a solid angle. By varying e.g. the distance between the receiving aperture of the antenna and the food product, the size of the first detection area is increased or decreased. For example, for a small distance between the array antenna, or its receiving aperture, and the food product, the detection area is small, whereas for a larger distance between the antenna and the food product, the detection area is larger. Furthermore, the position, in particular the lateral position, of the first detection area may be varied by adjusting antenna parameters. For example, by adjusting the phase differences between the single antennas constituting the array antenna accordingly, the directivity of the array antenna may be adjusted such that the detection area is altered. In particular, the direction of the focus of the antenna may be altered.

A person skilled in the art understands that a focus of an antenna implies a specific directivity. For example, a pencil like directivity may comprise a focus, whereas a cone like directivity may not comprise a focus. Preferably, the first detection area is adjusted such that an area parallel to the main plane of extension of the transportation means, in particular at that position, and with a main extension in a direction perpendicular to the transportation direction and parallel to the main plane of extension of the transportation means, and preferably with an extension in the transportation direction being small relative to its main extension, is covered.

Preferably, the distance between the array antenna and the food product is as small as possible, in particular about a quarter of the center wavelength of the array antenna. More preferably, the distance between the array antenna and the food product is equal to or less than 10 cm, or 50 cm, or 1 m, or 3 meters.

Preferably, the output signal of the temperature detection device is substantially independent of the ambient temperature, in particular in a temperature range between -20°C and 90°C or any temperature range with an upper bound less than or equal to 90°C and a lower bound greater than or equal to -20°C. More preferably, the temperature detection device and/or the array antenna is calibratable and/or configurable, in particular concerning its temperature dependence. Even more preferably, the temperature detection device and/or the array antenna is self-calibrating.

Preferably, the temperature detection device comprises an infra-red camera for measuring the surface temperature of the food product and/or for determining the position and/or shape and/or volume of the food product. It is herewith advantageously possible to enhance the lateral resolution of the temperature detection device by combining the signals of the array antenna and the infra-red camera. Additionally, it is herewith advantageously possible to provide for a technical redundancy by combining both signals. Alternatively or additionally, it is herewith advantageously possible to employ a array antenna with a lower lateral resolution than the infra-red camera and obtain a temperature distribution having a high resolution in all three dimensions by combining the signals.

Preferably, the temperature detection device comprises multiple infra-red cameras. It is herewith advantageously possible to create a three-dimensional temperature distribution and/or to create a three-dimensional image of the food product.

Preferably, the first detection area of the array antenna is smaller or equal to a second detection area of the infra-red camera at a predetermined distance.

Preferably, the first detection area comprises a rectangular or circular shape, in particular a shape in the form of a thin stripe. A person skilled in the art understands that the shape of the first detection area may be adjusted by adjusting antenna parameters and/or by providing shielding means between the food product and the antenna, e.g. an aperture.

If the first detection area of a single array antenna or a single antenna of an array antenna is small enough, the temperature detection device may be able to clearly detect the boundaries of a food product, as e.g. a transportation means or a substrate on which the food product is placed comprises a different temperature than the food product itself. Thus, an image, in particular even a topographical image of the food product may be created.

Furthermore, by using a multitude of array antennas and/or a multitude of antennas of an array antenna, a high lateral resolution may be achieved and thus the dimensions, in particular the surface and/or lateral dimensions of a food product may be precisely determined. In such a case, an infra-red camera may preferably be omitted.

Alternatively, the directivity of a array antenna may be adjustable such that the array antenna may scan over a surface, e.g. the position of the first detection area may be varied continuously or in discrete steps.

The person skilled in the art understands that the first and/or second detection area is related to an area of the receiving aperture of the array antenna and/or the infra-red camera, respectively. Beam-forming means such an aperture or means for adjusting the antenna parameters may cause a difference in size and/or shape of both corresponding areas.

A further subject matter of the present invention is a heat-treatment device, in particular an oven, for a food product, wherein the heat-treatment device comprises a heating means for applying heat to the food product and a temperature detection device according to the present invention.

It is herewith advantageously possible to provide a heat-treatment device for processing food, which measures the core temperature precisely and therefore is able to meet hygiene and/or food safety standards and/or health regulations. It is also possible to control the heat treatment device with the information gathered by the device, in particular by the temperature detection device; for example controlling the temperature and/or humidity of the heating medium, the heat transfer parameters and/or the residence time of the food product in the oven.

Preferably, the heat-treatment device comprises a transportation means for transporting the food product through the device along a transportation direction, wherein even more preferably the transportation means is a belt, in particular an endless belt.

The transportation direction may point in any special direction, wherein it is preferred that the transportation direction may be continuously varied. Preferably, the transportation means transports the food product along a helical or spiral path, or along a meandering path. Alternatively, the transportation direction is constant, in particular substantially parallel to a horizontal direction.

The transportation means may be arranged linearly, helically, or even meanderingly. The transportation means preferably comprises a uniform width. The width may substantially correspond to the width of a single food product. Preferably, the width is larger, in particular such that more than one food product can be placed on the transportation means side by side. For example, the width of the transportation means may be sufficient for 2 or 3 or up to 6 rows of food products or even more. The core temperature of each food product on the transportation means is preferably measured individually at least at one location, preferably a multitude of locations in x-any y-direction.

Preferably, the transportation means comprises a material that reflects and/or absorbs electromagnetic radiation, in particular microwave radiation. By choosing a microwave reflecting material, it is advantageously possible that even radiation emitted by the food product, whose core temperature is to be measured, in another direction than that towards the temperature detection device may be detected. By choosing an absorbing material, it is advantageously possible that radiation other than that emitted by the food product to be measured may be prevented from being detected by the temperature detection device.

Preferably, the transportation means is made of or at least partially coated with a heat-resistant and/or non-stick material, in particular polytetrafluoroethylene (so called Teflon). It is herewith advantageously possible to enhance the hygienic conditions of the heat treatment device.

The food products may be placed on the transportation means arbitrarily or in a given pattern, e.g. in rows. A person skilled in the art acknowledges that if several food products are distributed over the width of the transportation means, the resulting temperature distribution will not necessarily be uniform. Hence, a high lateral resolution is required to correctly assign a measured core temperature to a certain food product and/or even to a certain position of the food product.

Preferably, the temperature detection device or the array antenna is arranged beneath the transportation means. Alternatively or additionally, the temperature detection device or the array antenna may be arranged above the transportation means. By arranging the temperature detection device below the transportation means, it is advantageously possible to arrange it at a fixed height, regardless of the food product's dimensions. Even though those are the most common or practical arrangements, the array antenna may also be arranged on one or both sides of the transportation means, or in any combination of the above mentioned positions.

In the context of this application, it is assumed that the array antenna is arranged above and/or beneath the food product referring to the main plane of extension of the transportation means. All directional indications refer to this arrangement. This means that the vertical direction corresponds to a direction being transversal to the main plane of extension, i.e. in particular corresponding to the z-direction. A person skilled in the art understands how the indications must be changed accordingly in case of a different arrangement.

The heat treatment device can be for example an oven, a fryer, a thawing-apparatus or a frosting apparatus. Preferably, the heat treatment device is an oven, wherein the heating means heats a food product by radiation, conduction, natural and/or forced convection. Vapor can be added to the heat treatment device if needed to adjust the relative humidity in the heat treatment device and/or to influence the heat transfer.

The heat treatment device can be operated continuously or batch-wise, wherein a continuous operation is preferred.

Preferably, the heat treatment device comprises several chambers in which different heating regimes and/or different heating means and/or different environments are maintained. The heat treatment device comprises preferably means to control different parameters such as the temperature, the relative humidity and/or the heat transfer conditions in the heat treatment device. In a preferred embodiment, vacuum is applied to the heat treatment device, particularly in case of the heat treatment device being a thawing-apparatus.

Preferably, the heating means are configured such that pasteurization of the food product is achieved after transporting the food product through the heat-treatment device.

Preferably, the heat-treatment device comprises a shielding means, being configured such that the temperature detection device receives substantially only radiation emitted by the food product and/or the transportation means. More preferably, the temperature detection device receives substantially only radiation emitted from the first detection area and/or the second detection area by the food product.

Preferably, the shielding means is arranged at least partially surrounding the cross section of the transportation means at least in the region of the temperature detection device and/or in the region of the heating means.

Alternatively or additionally, the shielding means is arranged partially surrounding the temperature detection device, such that radiation emitted by the food product reaches the temperature detection device only through an opening in the shielding means. Even more preferably, the shielding means is both arranged at least partially surrounding the cross section of the transportation and/or heating means and partially surrounding the temperature detection device, in particular having an opening in a direct, vertical line between the first detection area of the food product and the receiving aperture of the temperature detection device or the array antenna.

Preferably, the heat-treatment device comprises a detection means for detecting the presence of a food product, wherein the detection means is preferably arranged before the heating means and/or the temperature detection device in the transportation direction.

Preferably, the heat-treatment device comprises a tracking means for tracking the position of a food product.

Preferably, the heat-treatment device comprises a manipulation means for manipulating, in particular removing, a food product.

Preferably, the heat-treatment device comprises control means for controlling at least one of the means, preferably comprising linear and/or feedback controls. More preferably, the control means is configured such that it controls the temperature detection device and/or the heating means in dependence of information provided by the tracking means and/or the detection means. Even more preferably, the control means is configured for increasing and/or decreasing the dwelltime and/or the temperature and/or the humidity. It is herewith advantageously possible that e.g. the heating means and/or the temperature detection device is turned off or turned to a lower power consumption mode as long as the detection means and/or the tracking means do not detect a food product at all or near the heating means and/or the temperature detection device.

Alternatively or additionally, the control means is configured such that it controls the manipulation means and/or heating means in dependence of information provided by the temperature detection means and/or the tracking means. It is herewith advantageously possible that e.g. a food product, in particular whose core temperature is measured to be lower than a predetermined value, is removed or heated at higher temperatures.

The control means may e.g. control the transportation velocity, the heating temperature and/or the humidity.

Preferably, the temperature detection device is provided before and/or after the heating means in the transportation direction.

Preferably, temperature detection devices are provided before and after the heating means in the transportation direction and the control means comprises a closed loop such that the heating means are adjusted in dependence of the measured core temperature of the food product before and/or after passing the heating means.

Preferably, the temperature detection device is provided such that the first detection area and/or the second detection area cover the entire width of the transportation means. Alternatively, a multitude of first detection areas cover the entire width of the transportation means or at least regions along the width of the transportation means on which food products are placed. A person skilled in the art understands that the first detection area may denote the area, in particular the minimal area, in which a core temperature of the food product is detected and that a multitude of antennas, in particular an array antenna, may comprise several first detection areas.

Preferably, the first detection areas are arranged side by side along the width of the transportation means. Alternatively, the first detection areas are spaced apart such that the temperature detection device takes samples of the core temperature over the width of the transportation means.

Yet another subject matter of the present invention is a method for measuring a core temperature of a food product using a temperature detection device according to the present invention, wherein an array antenna is operated such that a first detection area of the array antenna is scanned over the food product in at least one direction and/or the array antenna comprises a multitude of first detection areas and/or the first detection area spans across the entire food product in at least one direction, wherein the core temperature of the food product in the first detection area is measured.

The disclosure made regarding this subject matter of the present invention also applies to the other subject matters of the present application and vice versa.

It is herewith advantageously possible to measure the core temperature of a food product in an easy, yet rapid and precise manner. The method allows in a particularly advantageous manner to be adapted for different requirements. Thus, e.g. a single array antenna may be employed which lowers the production cost of the temperature detection device. Yet, employing only one array antenna scanning across the food product or food products may require a low speed of the food products relative to the temperature detection device and/or a small scanning length.

If alternatively or additionally the first detection area spans across the entire food product, for example having the shape of a thin stripe, the lateral resolution may be lower.

Alternatively, if the temperature detection device comprises multiple first detection areas, e.g. by comprising multiple array antennas each having a first detection area, the measurement speed and the temperature distribution resolution may be high, yet, it may involve the temperature detection device having higher production costs as well.

A further subject matter of the present invention is a method for controlling a heat treatment device according to the present invention by using a temperature detection device according to the present invention, wherein in a first step a food product is heat-treated by a heating means, wherein in a second step a core temperature of the food product is measured by a temperature detection device, wherein in a third step a control means controls the heating means depending on information provided by the temperature detection device.

The disclosure made regarding this subject matter of the present invention also applies to the other subject matters of the present application and vice versa.
It is herewith advantageously possible to operate an inventive heat treatment device more efficiently. Furthermore, it is herewith advantageously possible to enhance the taste of the food product and/or the compliance with health, safety, food and hygiene regulations. If after subjecting the food product to the heat treatment of the heating means, the measured core temperature is outside a predetermined temperature range, the heating means may automatically be adjusted, which enhances the heat treatment process and allows for a substantially fully-automatic operation of the heat-treatment device.

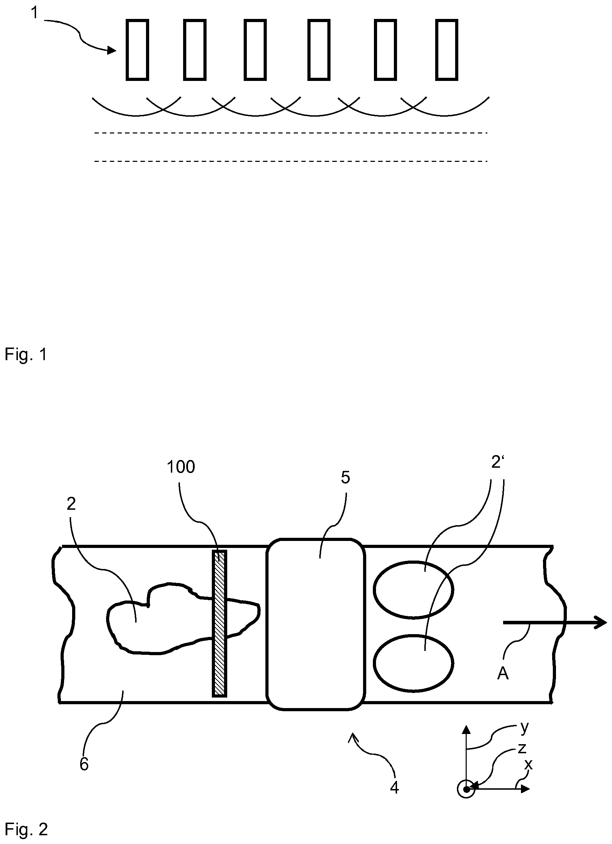

The inventions are now explained according to Figures 1 to 8. These explanations are intended as mere examples and do not limit the scope of protection. The figures are intended to illustrate features of the invention and may therefore depict elements within an illustration not to scale and/or in different scales.
- **Figure 1**: shows a schematic illustration of an array antenna.
- **Figure 2**: shows a schematic top view of a heat-treatment device according to an exemplary embodiment of the present invention.
- **Figure 3**: shows a schematic top view of a heat-treatment device according to an exemplary embodiment of the present invention.
- **Figure 4**: shows a schematic side view of a temperature detection device according to an exemplary embodiment of the present invention.
- **Figure 5**: shows a schematic side view of the principle of an array antenna according to an exemplary embodiment of the present invention.
- **Figure 6**: shows a schematic side view of a temperature detection device according to an exemplary embodiment of the present invention.
- **Figure 7**: shows a cross-sectional detail of a temperature detection device according to an exemplary embodiment of the present invention.
- **Figures 8 to 10**: show schematic top views of different embodiments of the inventive concept.

**Figure 1** shows a schematic illustration of an array antenna. An array antenna consists of a multitude of antennas, here six, that are electronically connected and controlled, preferably individually, such that their phase differences can be controlled.

In the depicted case, all antennas comprise the same phase, i.e. the phase difference is zero. In this example, the signals from each antenna will interfere constructively such that from a certain distance, the wave radiating from the antenna appears to be a plane wave. According to the present invention, a phased array antenna is employed. Thus, the phase of the antennas can be adjusted such that their signals interfere in such a way that a highly directive antenna pattern-is created. Thus, the directivity 200 of a phased array antenna can be controlled, allowing for a focus on a very small area, .e.g. on the scale of a few mm².

**Figure 2** shows a schematic top view of a heat-treatment device 4 according to a exemplary embodiment of the present invention. The heat-treatment device 4 may be an oven and usually comprises a housing, which is not depicted for reasons of clarity. The heat-treatment device 4 further comprises a heating means 5, which apply heat to food products 2, 2' which are passed by the heating means 5. Such food products 2, 2' are for example meat products or any other protein containing product that need to be pasteurized to improve their taste and/or to comply with food and/or safety and/or hygiene regulations.

The food products 2, 2' are placed on a transportation means 6 by which they are transported through the heat-treatment device 4 in a transportation direction A. Some food products 2 may be arbitrarily arranged on the transportation means 6, while other food products (in the same or a different embodiment) 2' may be arranged in a predetermined pattern, here in rows and side by side along the width of the transportation means 6.

The heat-treatment device 4 comprises at least one temperature detection device 1, which is not depicted in **Figure 2**. The temperature detection device 1 is configured such that it measures the core temperature of a food product 2, 2', i.e. the temperature in the center of the food product 2, 2' referring to the z-direction, which runs perpendicularly to the plane of projection in the illustration according to Figure 2. This is achieved by measuring the microwave radiation emitted by the food product 2, 2', e.g. with a center frequency of 3.2 GHz and a bandwidth of 80 MHz.

The temperature detection device 1 is preferably configured such that it measures the core temperature in a first detection area 100 which preferably covers the entire width of the transportation means 6. In order to provide a high lateral resolution, i.e. in the x-y direction, the temperature detection device 1 comprises array antennas, wherein each array antenna and/or each antenna of an array antenna covers a small detection area, such that the first detection area 100 comprises a multitude of detection areas.

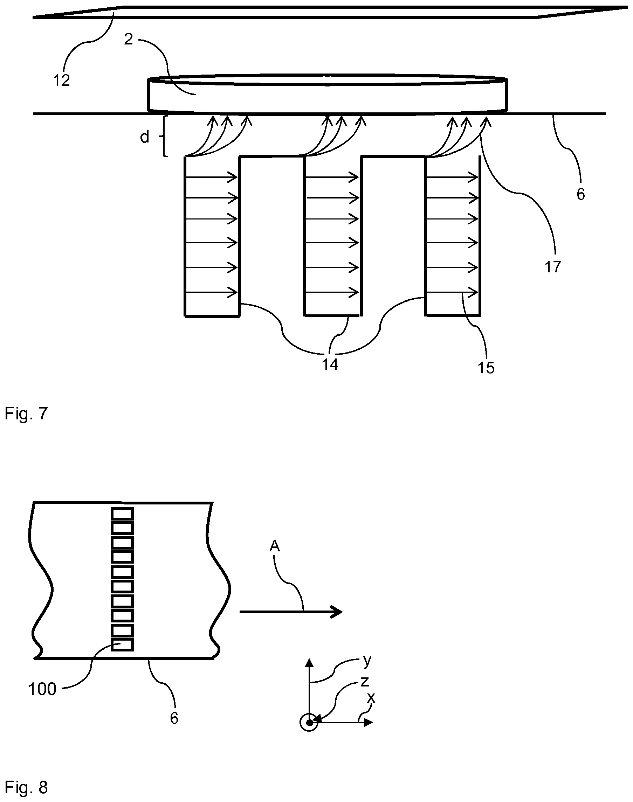

Alternative embodiments regarding the first detection area 100 are discussed below with reference to Figures 8a to 8c.

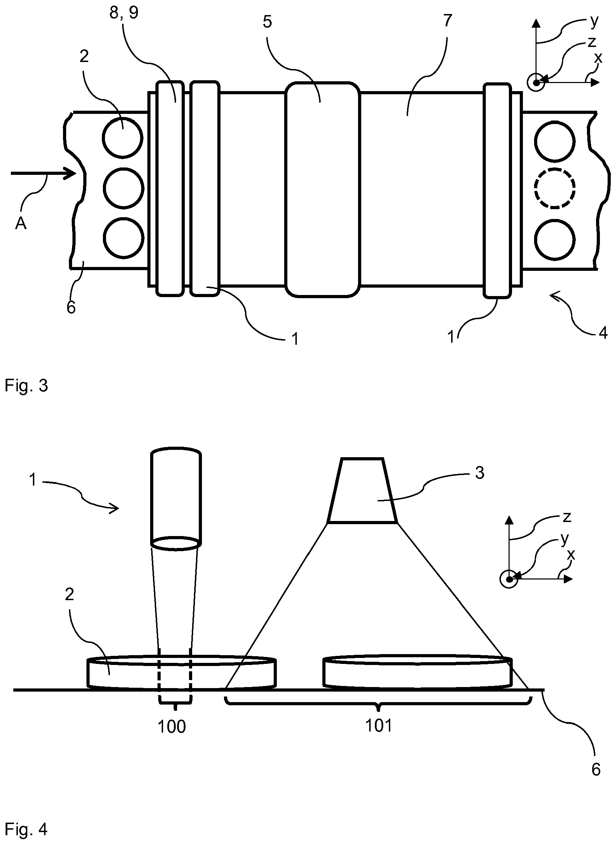

**Figure 3** shows a schematic top view of a heat-treatment device 4 according to an exemplary embodiment of the present invention. The illustrated embodiment substantially corresponds to the embodiment discussed with reference to Figure 2. According to the embodiment shown here, the heat-treatment device 4 further comprises shielding means 7, which may be integrated in the housing of the heat-treatment device 4 and isolates the temperature detection device 1 from external sources of radiation or even from radiation emitted by other food products 2 or regions of the food product 2, which are currently not in the first detection area 100. The shielding means 7 surrounds the cross section of the transportation means entirely.

The heat-treatment device 4 comprises two temperature detection devices 1, wherein one is arranged before the heating means 5 in the transportation direction A and the other is arranged after the heating means 5 in the transportation direction A. Thus, the heating means can be operated in dependence of the initial core temperature of the food product 2 and the core temperature is checked e.g. for safety reasons after the heating process. If a food product 2 has a core temperature below a predetermined value after heating, a manipulation means 10, which is not depicted, may remove the food product 2 from the transportation means 6 and dispose of it, which is indicated by the dashed circle.

Furthermore, the heat-treatment device 4 may comprise a detection means 8 and/or a tracking means 9.

The detection means 8 is for example a photo sensor, whereas the tracking means 9 may be a CCD camera. The detection means 8 detects the presence of a food product 2 and e.g. if no food product 2 is detected, it turns the heating means 5 down or even off. Alternatively or additionally, the temperature detection device 1, in particular an array antenna, may be a detection means 8 as well. For example, a certain minimum temperature value may be set as a threshold for detection the presence of a food product, thus e.g. differentiating between the transportation means 6 and a food product 2, 2'.

Preferably, a multitude of infra-red cameras is employed as detection means, e.g. by measuring the shape and/or position and/or volume of the food product. Thus, a three-dimensional image, of the food product may be obtained.

The tracking means 9 tracks the position or dimensions of the food product 2 in particular along the width of the transportation means 6, or the position or dimensions in the plane of projection and correlates the information with the core temperature measured by the temperature detection device 1. Thus, a combined image comprising temperature distribution information can be created which allows for a better control of the heating process.

The detection means 8 may comprise at least partially the same elements as the tracking means 9 and/or the detection means 8 may be configured such that it carries out the functions of the tracking means 9 as well, e.g. determining the dimensions of the food product along at least one direction (i.e. x, y and/or z direction).

**Figure 4** shows a schematic side view of a temperature detection device 1 according to an exemplary embodiment of the present invention. The temperature detection device 1 comprises an array antenna and an infra-red camera 3 which comprise a first detection area 100 and a second detection area 101, respectively. As indicated, the second detection area 101 may be larger than the first detection area 100. Alternatively, the second detection area 101 equals the first detection area.

The infra-red camera 3 yields a highly resolved surface temperature distribution. By combining the surface temperature resolution of the infra-red camera 3 with the core temperature distribution of the array antenna, a precise, three-dimensional temperature distribution can be obtained. This is particularly helpful in case that the lateral resolution of the array antenna is low compared to the infra-red camera. Yet, if the lateral resolution of the array antenna or the combined lateral resolution of at least two array antennas is high enough, such an infra-red camera 3 may not be needed in order to obtain a well-resolved temperature distribution.

Although according to the illustrated embodiment, the temperature detection device 1 is arranged above the food product 2 and the transportation means 6, it is preferred that the temperature detection device 1 is arranged below the transportation means. It may as well be arranged at any other position.

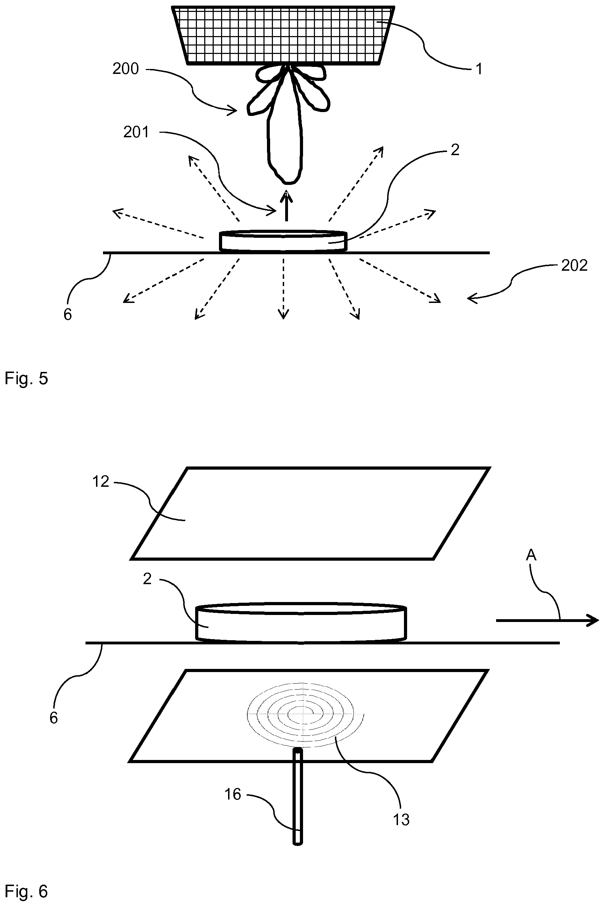

**Figure 5** shows a schematic side view of the principle of an array antenna according to another exemplary embodiment of the present invention. As indicated, the temperature detection device 1 comprises a multitude of antennas or even a multitude of array antennas. The temperature detection device 1 comprises a directivity 200.

The illustrated arrangement serves only for explanatory purposes. Preferably, the array antenna or the temperature detection device is arranged below the food product and the transportation means.

Hence, the isotropic microwave radiation being indicative of the core temperature of the food product 2 is only partially detected. As illustrated, only a portion of the radiation corresponds to received energy 201, while the rest is lost energy 202.

In order to increase the fraction of the received energy 201, a reflector plate may be arranged beneath the transportation means 6, reflecting the microwave radiation.

The person skilled in the art acknowledges that the directivity 200 determines which fraction of the total radiation emitted by the food product 2 corresponds to the received energy 201 and which fraction corresponds to the lost energy 202. Thus, by varying the directivity 200, e.g. by adjusting the phase shifts of the antennas of an array antenna, the fraction of the received energy 201 may be varied, in particular the solid angle from which it is collected and/or the amount of received energy 201.

**Figure 6** shows a schematic side view of a temperature detection device according to a further exemplary embodiment of the present invention. Here, an array antenna comprises an open waveguide 13 of the leaky wave coupled type, which is arranged under the transportation means 6 and thus under the food product 2 being measured.

The open waveguide 13 is here provided spirally and comprises e.g. a length of about 20 times the wavelength. The open waveguide 13 may function as an antenna of a array antenna or may constitute an array antenna of its own, e.g. with its waveguide loops 14 corresponding to the antennas of the array antenna.

A reflector plate as discussed with reference to **Figure 5** may be arranged above the food product 2. The open waveguide 13 may be connected to analyzing electronics via a coaxial cable 16.

**Figure 7** shows a cross-sectional detail of a temperature detection device according to an exemplary embodiment of the present invention, in particular according to the embodiment discussed with reference to Figure 6. The open waveguide 13 comprises several waveguide loops 14 and is arranged e.g. at a distance d corresponding to a quarter of the wavelength, i.e. the center wavelength at which the array antenna is operated.

The open waveguide 13 guides a traveling electromagnetic wave 15. At the opening, evanescent and/or leaky waves 17 radiate off the waveguide loops 14. Those leaky waves 17 decay exponentially with increasing distance from the opening.

If the open waveguide 13 and therefore the array antenna is arranged close enough to the food product 2, its microwave radiation can be sensed, i.e. the radiation interferes with the leaky waves 17.

By adjusting the directivity 200 and the dimensions of the open waveguide 13, the resolution of the array antenna can be controlled. The directivity 200 can be controlled e.g. by varying the frequency/wavelength.

**Figures 8 to 10** show schematic top views of different embodiments of the temperature detection device according to the present invention. According to the embodiment illustrated in **Figure 8**, a temperature detection device 1 (not depicted) comprises a multitude of first detection areas 100 such that the temperature detection device 1 may measure the core temperature of a food product 2,2' (not depicted) preferably substantially across the entire width of a transportation means 6, of which only a small region is shown.

This is e.g. achieved by the temperature detection device 1 comprising a multitude of array antennas, each of which comprises a small focus, namely a first detection area 100.

Each first detection area 100 comprises a high lateral resolution, e.g. in the x and y direction, as well as a high vertical resolution, e.g. in the z direction.

Thus, according to this embodiment, the core temperature of a food product 2,2' may be measured substantially at any point along the width of the transportation means 6 with a high resolution in all spatial dimensions.

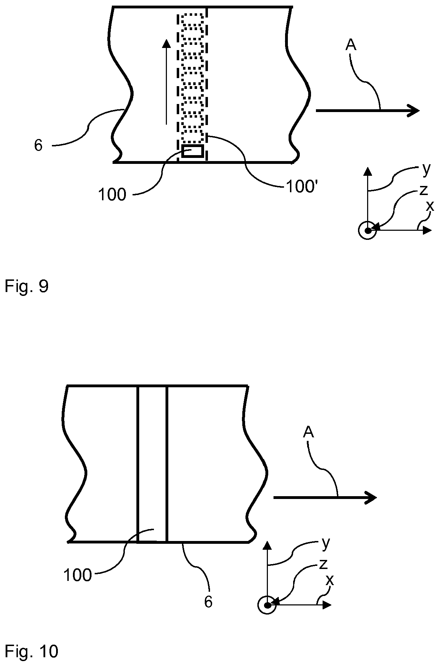

An alternative embodiment is illustrated in **Figure 9**. Here, an array antenna of the temperature detection device 1 comprises a relatively small focus, i.e. a first detection area 100. This detection area is scanned across a wider area, e.g. as illustrated here, it is scanned along the width of the transportation means 6.

Thus, the core temperature is measured substantially along the entire width of the transportation means 6 as well, but e.g. only one array antenna is required. By controlling the operating parameters of the array antenna, e.g. by adjusting the phase differences of the antennas constituting the array antenna, the scanning may be effectuated. Even though a one-dimensional scan along a direction parallel to the y-axis is shown here, other scanning paths are conceivable as well. For example, a meandering path might be possible, e.g. in case of a low velocity of the transportation means 6.

If the width of the transportation means 6 is relatively large, e.g. such that several food products 2,2' are placed substantially side by side, for guaranteeing that the core temperature of all food products 2,2' is measured, the velocity of the transportation means and/or the measurement time has to be chosen accordingly.

Alternatively, according to an embodiment illustrated in **Figure 10**, the directivity 200 of the array antenna may be adjusted such that the detection area equals a first detection area 100' as shown, i.e. comprising the shape of a thin stripe along the width of the transportation means 6.

Thus, the core temperature of food products 2,2' distributed over the width of the transportation means 6 may be measured in one measurement. Yet, usually the lateral resolution will not be as high as in the embodiments described above.

Instead of using just one array antenna with a first detection area 100' as illustrated, a multitude of array antennas may be used with at least partly overlapping first detection areas 100, thus creating a first detection area 100' as illustrated, but providing a certain redundancy and thus a higher resolution.

### List of reference signs:

- 1 -: temperature detection device
- 2,2' -: food product
- 3 -: infra-red camera
- 4 -: heat-treatment device
- 5 -: heating means
- 6 -: transportation means
- 7 -: shielding means
- 8 -: detection means
- 9 -: tracking means
- 10 -: manipulation means
- 11 -: control means
- 12 -: reflector plate
- 13 -: open waveguide
- 14 -: waveguide loop
- 15 -: traveling wave
- 16 -: coaxial cable
- 17 -: leaky/evanescent wave

- 100,100' -: first detection area
- 101 -: second detection area
- 200 -: directivity
- 201 -: received energy
- 202 -: lost energy

- A -: transportation direction
- d -: distance
- x,y,z -: directions

## Claims

1. Heat-treatment device (4), in particular oven, for a food product (2), wherein the heat-treatment device (4) comprises a heating means (5) for applying heat to the food product (2) and a temperature detection device (1) for measuring the core temperature of the food product (2), **characterized in that** the device (1) comprises a microwave detecting array which is a phased array antenna.

2. Heat-treatment device (4), according to claim 1, **characterized in that** the array antenna is configured such that it is operated as a Dicke radiometer.

3. Heat-treatment device (4), according to any one of the preceding claims, **characterized in that** the array antenna comprises an open waveguide (13), in particular a leaky wave type open waveguide (13).

4. Heat-treatment device (4), according to any one of the preceding claims, **characterized in that** the measurement time of the array antenna is adjustable between between 0.5 s and 10s.

5. Heat-treatment device (4), according to any one of the preceding claims, **characterized in that** the array antenna comprises a passive radiator and/or **in that** the array antenna is a passive antenna.

6. Heat-treatment device (4), according to any one of the preceding claims, **characterized in that** the array antenna is most sensitive between 1.5 and 4 GHz, preferably between 2.8 and 3.6 GHz, in particular around 3.2 GHz and/or preferably between 1.2 and 2.0 GHz, in particular around 1.575 GHz.

7. Heat-treatment device (4), according to any one of the preceding claims, **characterized in that** the measuring bandwidth of the array antenna comprises approximately 80 MHz or is adjustable between 40 MHz and 120 MHz or between 60 MHz and 100 MHz

8. Heat-treatment device (4), according to any one of the preceding claims, **characterized in that** a first detection area (100) of the array antenna at a predetermined distance from a receiving aperture of the array antenna is smaller than 10 mm², preferably smaller than 1 mm², in particular around 0.1 mm².

9. Heat-treatment device (4), according to claim 1, **characterized by** comprising an infra-red camera (3) for measuring the surface temperature of the food product and/or for determining the position and/or shape and/or volument of the food product.

10. Heat-treatment device (4), according to claim 9, wherein a first detection area (100) of the array antenna is smaller or equal than a second detection area (101) of the infra-red camera (3).

11. Heat-treatment device (4) according to one of the preceding claims, **characterized by** comprising a transportation means (6) for transporting the food product through the device (4) along a transportation direction (A), wherein the transportation means (6) is preferably a belt, in particular an endless belt.

12. Heat-treatment device (4) according to any one of the preceding claims, **characterized by** comprising a shielding means (7), being configured such that the temperature detection device (1) receives substantially only radiation emitted by the food product (2) and/or the transportation means (6).

13. Heat-treatment device (4) according to any one of the preceding claims, **characterized by** comprising a detection means (8) for detecting the presence of the food product (2), wherein the detection means (8) is preferably arranged before the heating means (5) in the transportation direction (A), and/or a tracking means (9) for tracking the position of the food product (2) and/or a manipulation means (10) for manipulating, in particular removing, the food product (2).

14. Method for controlling a heat treatment device (4) according to any one of claims 1 to 14, wherein in a first step a food product (2,2') is heat-treated by a heating means (5), wherein in a second step a core temperature of the food product (2, 2') is measured by a temperature detection device (1), wherein in a third step a control means (11) controls the heating means (5) depending on information provided by the temperature detection device (1).

## Patentansprüche

1. Wärmebehandlungsvorrichtung (4), insbesondere ein Ofen, für ein Nahrungsmittelprodukt (2), wobei die Wärmebehandlungsvorrichtung (4) ein Erwärmungsmittel (5) zum Erwärmen des Nahrungsmittelprodukts (2) und eine Temperaturerfassungsvorrichtung (1) zum Messen der Kerntemperatur des Nahrungsmittels (2) umfasst, **dadurch gekennzeichnet, dass** die Vorrichtung (1) ein Mikrowellenerfassungsarray umfasst, das eine phasengesteuerte Gruppenantenne ist.

2. Wärmebehandlungsvorrichtung (4) nach Anspruch 1, **dadurch gekennzeichnet, dass** die Gruppenantenne derart konfiguriert ist, dass sie als ein Dicke-Radiometer betrieben wird.

3. Wärmebehandlungsvorrichtung (4) nach einem der vorangegangenen Ansprüche, **dadurch gekennzeichnet, dass** die Gruppenantenne einen offenen Wellenleiter (13), insbesondere einen offenen Leckwellenleiter (13), umfasst.

4. Wärmebehandlungsvorrichtung (4) nach einem der vorangegangenen Ansprüche, **dadurch gekennzeichnet, dass** die Messzeit der Gruppenantenne zwischen 0,5 s und 10 s einstellbar ist.

5. Wärmebehandlungsvorrichtung (4) nach einem der vorangegangenen Ansprüche, **dadurch gekennzeichnet, dass** die Gruppenantenne einen Passivradiator umfasst und/oder die Gruppenantenne eine passive Antenne ist.

6. Wärmebehandlungsvorrichtung (4) nach einem der vorangegangenen Ansprüche, **dadurch gekennzeichnet, dass** die Gruppenantenne zwischen 1,5 und 4 GHz, vorzugsweise zwischen 2,8 und 3,6 GHz, insbesondere um 3,2 GHz herum, und/oder vorzugsweise zwischen 1,2 und 2,0 GHz, insbesondere um 1,575 GHz herum, am empfindlichsten ist.

7. Wärmebehandlungsvorrichtung (4) nach einem der vorangegangenen Ansprüche, **dadurch gekennzeichnet, dass** die Messbandbreite der Gruppenantenne ungefähr 80 MHz umfasst oder zwischen 40 MHz und 120 MHz oder zwischen 60 MHz und 100 MHz einstellbar ist.

8. Wärmebehandlungsvorrichtung (4) nach einem der vorangegangenen Ansprüche, **dadurch gekennzeichnet, dass** ein erster Erfassungsbereich (100) der Gruppenantenne bei einem vorbestimmten Abstand von einer Empfangsapertur der Gruppenantenne kleiner als 10 mm², vorzugsweise kleiner als 1 mm², insbesondere um 0,1 mm² herum, ist.

9. Wärmebehandlungsvorrichtung (4) nach Anspruch 1, **dadurch gekennzeichnet, dass** sie eine Infrarotkamera (3) zum Messen der Oberflächentemperatur des Nahrungsmittelprodukts und/oder zum Bestimmen der Position und/oder der Form und/oder des Volumens des Nahrungsmittelprodukts umfasst.

10. Wärmebehandlungsvorrichtung (4) nach Anspruch 9, wobei ein erster Erfassungsbereich (100) der Gruppenantenne kleiner als oder gleich einem zweiten Erfassungsbereich (101) der Infrarotkamera (3) ist.

11. Wärmebehandlungsvorrichtung (4) nach einem der vorangegangenen Ansprüche, **dadurch gekennzeichnet, dass** sie ein Transportmittel (6) zum Transportieren des Nahrungsmittelprodukts durch die Vorrichtung (4) entlang einer Transportrichtung (A) umfasst, wobei das Transportmittel (6) vorzugsweise ein Transportband, insbesondere ein Endlosband, ist.

12. Wärmebehandlungsvorrichtung (4) nach einem der vorangegangenen Ansprüche, **dadurch gekennzeichnet, dass** sie ein Abschirmungsmittel (7) umfasst, das so konfiguriert ist, dass die Temperaturerfassungsvorrichtung (1) im Wesentlichen nur Strahlung, die durch das Nahrungsmittelprodukt (2) und/oder das Transportmittel (6) emittiert wird, empfängt.

13. Wärmebehandlungsvorrichtung (4) nach einem der vorangegangenen Ansprüche, **dadurch gekennzeichnet, dass** sie ein Erfassungsmittel (8) zum Erfassen des Vorhandenseins des Nahrungsmittelprodukts (2), wobei das Erfassungsmittel (8) vorzugsweise in der Transportrichtung (A) vor dem Heizmittel (5) angeordnet ist, und/oder ein Verfolgungsmittel (9) zum Verfolgen der Position des Nahrungsmittelprodukts (2) und/oder ein Handhabungsmittels (10) zum Handhaben, insbesondere Entfernen, des Nahrungsmittelprodukts (2) umfasst.

14. Verfahren zum Steuern einer Wärmebehandlungsvorrichtung (4) gemäß einem der Ansprüche 1 bis 14, wobei in einem ersten Schritt ein Nahrungsmittelprodukt (2, 2') durch ein Erwärmungsmittel (5) wärmebehandelt wird, wobei in einem zweiten Schritt eine Kerntemperatur des Nahrungsmittelprodukts (2, 2') durch eine Temperaturerfassungsvorrichtung (1) gemessen wird, wobei in einem dritten Schritt ein Steuermittel (11) das Erwärmungsmittel (5) in Abhängigkeit von Informationen, die durch die Temperaturerfassungsvorrichtung (1) bereitgestellt werden, steuert.

## Revendications

1. Dispositif de traitement thermique (4), en particulier, un four, pour un produit alimentaire (2), dans lequel le dispositif de traitement thermique (4) comprend un moyen de chauffage (5) pour appliquer de la chaleur au produit alimentaire (2) et un dispositif de détection de température (1) pour mesurer la température à coeur du produit alimentaire (2), **caractérisé en ce que** le dispositif (1) comprend un réseau de détection hyperfréquence qui est une antenne en réseau phasé.

2. Dispositif de traitement thermique (4) selon la revendication 1, **caractérisé en ce que** l'antenne en réseau est configurée de telle sorte qu'elle fonctionne comme un radiomètre de Dicke.

3. Dispositif de traitement thermique (4) selon l'une quelconque des revendications précédentes, **caractérisé en ce que** l'antenne en réseau comprend un guide d'ondes ouvert (13), en particulier un guide d'ondes ouvert du type à ondes de fuite.

4. Dispositif de traitement thermique (4) selon l'une quelconque des revendications précédentes, **caractérisé en ce que** le temps de mesure de l'antenne en réseau est ajustable entre 0,5 s et 10 s.

5. Dispositif de traitement thermique (4) selon l'une quelconque des revendications précédentes, **caractérisé en ce que** l'antenne en réseau comprend un radiateur passif et/ou **en ce que** l'antenne en réseau est une antenne passive.

6. Dispositif de traitement thermique (4) selon l'une quelconque des revendications précédentes, **caractérisé en ce que** l'antenne réseau est la plus sensible entre 1,5 et 4 GHz, de préférence entre 2,8 et 3,6 GHz, en particulier autour de 3,2 GHz et/ou de préférence entre 1,2 et 2,0 GHz, en particulier autour de 1,575 GHz.

7. Dispositif de traitement thermique (4) selon l'une quelconque des revendications précédentes, **caractérisé en ce que** la largeur de bande de mesure de l'antenne en réseau fait approximativement 80 MHz ou est ajustable entre 40 MHz et 120 MHz ou entre 60 MHz et 100 MHz.

8. Dispositif de traitement thermique (4) selon l'une quelconque des revendications précédentes, **caractérisé en ce qu'**une première zone de détection (100) de l'antenne en réseau à une distance prédéterminée par rapport à une ouverture de réception de l'antenne en réseau est inférieure à 10 mm², de préférence inférieure à 1 mm², en particulier autour de 0,1 mm².

9. Dispositif de traitement thermique (4) selon la revendication 1, **caractérisé en ce qu'**il comprend une caméra infrarouge (3) pour mesurer la température de surface du produit alimentaire et/ou pour déterminer la position et/ou le volume du produit alimentaire.

10. Dispositif de traitement thermique (4) selon la revendication 9, dans lequel une première zone de détection (100) de l'antenne en réseau est inférieure ou égale à une seconde zone de détection (101) de la caméra infrarouge (3).

11. Dispositif de traitement thermique (4) selon l'une quelconque des revendications précédentes, **caractérisé en ce qu'**il comprend un moyen de transport (6) pour transporter le produit alimentaire à travers le dispositif (4) dans une direction de transport (A), dans lequel le moyen de transport (6) est, de préférence, une courroie, en particulier une courroie sans fin.

12. Dispositif de traitement thermique (4) selon l'une quelconque des revendications précédentes, **caractérisé en ce qu'**il comprend un moyen de protection (7), qui est configuré de telle sorte que le dispositif de détection de température (1) ne reçoive sensiblement qu'un rayonnement émis par le produit alimentaire (2) et/ou le moyen de transport (6).

13. Dispositif de traitement thermique (4) selon l'une quelconque des revendications précédentes, **caractérisé en ce qu'**il comprend un moyen de détection (8) pour détecter la présence du produit alimentaire (2), dans lequel le moyen de détection (8) est, de préférence, disposé avant le moyen de chauffage (5) dans la direction de transport (A) et/ou un moyen de suivi (9) pour suivre la position du produit alimentaire (2) et/ou un moyen de manipulation (10) pour manipuler, en particulier, retirer, le produit alimentaire (2).

14. Procédé pour commander un dispositif de traitement thermique (4) selon l'une quelconque des revendications 1 à 14, dans lequel, au cours d'une première étape, un produit alimentaire (2, 2') est traité par la chaleur par un moyen de chauffage (5), dans lequel, au cours d'une deuxième étape, une température à coeur du produit alimentaire (2, 2') est mesurée par un dispositif de détection de température (1), dans lequel, au cours d'une troisième étape, un moyen de commande (11) commande le moyen de chauffage (5) en fonction d'informations fournies par le dispositif de détection de température (1).
